# EUROPÄISCHE PATENTSCHRIFT

(11) **EP 3 310 976 B1**
(45) Veröffentlichungstag und Bekanntmachung des Hinweises auf die Patenterteilung: **05.07.2023**
(21) Anmeldenummer: 16728858.8
(22) Anmeldetag: 25.05.2016
(51) Int. Cl.: E04C 5/04, B21F 27/02

(54) **GITTERSTRUKTUR BZW. VERFAHREN ZU DESSEN HERSTELLUNG**
LATTICE STRUCTURE AND METHOD FOR PRODUCING SAME
STRUCTURE EN TREILLIS ET PROCÉDÉ DE FABRICATION DE CETTE STRUCTURE

(30) Priorität: 19.06.2015 CH 9202015
(43) Veröffentlichungstag der Anmeldung: 25.04.2018
(73) Patentinhaber: Geobrugg AG, 8590 Romanshorn (CH)
(72) Erfinder: VON ALLMEN, Hans-Peter, 1712 Tafers (CH)
(74) Vertreter: Daub, Thomas
(86) Internationale Anmeldenummer: PCT/EP2016/061826
(87) Internationale Veröffentlichungsnummer: WO 2016/202545

(56) Entgegenhaltungen:
- DE-C- 636 980
- DE-C- 636 980
- GB-A- 172 476
- GB-A- 172 476
- JP-U- S6 318 506
- JP-Y2- H0 322 322
- US-A- 5 788 223
- US-A- 5 788 223

## Beschreibung

Die Erfindung betrifft eine Gitterstruktur nach dem Oberbegriff des Anspruchs 1.

Gitterstrukturen dieser Art werden als Bauelemente in Gestalt von flachen oder gewellten Trag- oder Schutzgittern eingesetzt, wobei die Schubfestigkeit der Knotenpunkte sicherstellt, dass das Gitter auch bei hohen Belastungen nur geringe Verformungen erfährt. Zum Verbinden der Drähten in den Knotenpunkten werden bisher Schweissverbindungen, Klemmen oder zusätzliches Drahtmaterial oder ähnliches verwendet.

Eine Gitterstruktur dieser Art ist in der AT-PS 409 506 B geoffenbart. Sie besteht aus stabförmigen Über- und Untergurten, zwischen denen Verbindungsstäbe eingeschweisst sind. Diese die Knotenpunkte bildenden Schweissstellen bringen einerseits Gefügeänderungen mit sich und verursachen andererseits einen hohen Fertigungsaufwand beim Zusammenschweissen der Gurtstäbe. Letzteres trifft auch bei Verwendung von mechanisch verarbeiteten Verbindungselementen zu, die ebenfalls einen hohen Arbeits- und Kostenaufwand zur Folge haben. GB 172 476 A offenbart eine Gitterstruktur nach dem Oberbegriff des Anspruchs 1.

Der Erfindung liegt demgegenüber die Aufgabe zugrunde, diese Nachteile zu vermeiden und eine Gitterstruktur der eingangs genannten Gattung zu schaffen, deren Knotenpunkte keine Schweissstellen oder zusätzliche Materialien aufweisen und sie dabei aber effizient und wirtschaftlich herstellbar ist. Ferner soll auch der Korrosionsschutz der Gitterstruktur dauerhaft gewährleistet sein.

Diese Aufgabe wird erfindungsgemäss nach den Merkmalen des Anspruchs 1 bzw. der Ansprüche 7 und 8 gelöst.

Damit entsteht zwischen den Längs- und Querelementen eine unverschiebbare Verbindung, die ohne fremde Verbindungsmittel und mit verhältnismässig geringem Aufwand herstellbar ist. Zusätzlich ergibt sich eine höhere Lebensdauer der Gitterstruktur, da keine schwächenden Schweissstellen oder ähnlichem bei den Knotenpunkten vorhanden sind. Das erfindungsgemässe Gitter lässt sich in verschiedenen Ausführungsformen realisieren. In einer ersten Ausführungsform sieht die Erfindung vor, dass die Längs- und Querelemente des Gitters mit entlang der Elemente vorzugsweise senkrecht zur Gitterebene offenen oder geschlossenen, unverdrillten oder teilweise vorverdrillten Schlaufen versehen sind, die an den Kreuzungsstellen der Elemente miteinander verdrillt sind und so Knotenpunkte bilden. Um dieses Verbinden zu erleichtern, sind die Schlaufen der Längsdrähte in Längsrichtung der Drähte angeordnet, während die Schlaufen der Querelemente quer zur Längsrichtung der Drähte ausgerichtet sind. Es ist aber auch ohne weiteres möglich, umgekehrt die Längsdrähte mit quer zur Längsrichtung der Drähte angeordneten Schlaufen zu versehen, indes die Querelemente mit in Längsrichtung der Drähte angeordneten Schlaufen versehen sind.

Die Erfindung sieht vor, dass sich das Gitter aus zumindest doppelt geführten und an den Kreuzungsstellen der Drähte ineinander durchgeführt und mit sich selbst verdrillten Längs- und Querelementen zusammensetzt.

Hierbei ist es zweckmässig, vorzugsweise die Litzen oder Seile mit entlang derselben verteilten Durchgängen zur Aufnahme der durch sie hindurchgeführten Querelemente zu versehen. Es können aber umgekehrt genauso die Durchgänge in den Querelementen vorgesehen und die Längsdrähte durch die Querelemente hindurchgeführt werden.

Im Hinblick auf die Stabilität des Gitters im Belastungszustand ist es vorteilhaft, wenn die Längs- und Querelemente in einer Ebene liegend rechtwinklig zueinander ausgerichtet sind. Die erfindungsgemässe Bildung der Knotenpunkte ist aber auch ohne weiteres bei Gittern mit anderen Kreuzungswinkeln anwendbar.

Es ist ebenfalls fertigungstechnisch vorsteilhaft, wenn die Abstände zwischen den Knotenpunkten des Gitters in Längs- bzw. Querrichtung gleichmässig sind.

Erfindungsgemäß sind die Längs- undloder Querelemente zumindest teilweise aus hochfestem Stahl, mit einer Festigkeit von 700 N/mm² bis 2800 N/mm² hergestellt.

Ausführungsbeispiele der Erfindung sind nachfolgend anhand der Zeichnung näher erläutert. Es zeigen:
- Fig.1: eine perspektivische schematische Darstellung einer Gitterstruktur;
- Fig.2 a,b: die Längs- und Querelemente des Gitters nach Fig. 1 vor dem Verdrillen der Drahtschlaufen, in der Seitenansicht bzw. perspektivisch dargestellt,
- Fig. 3 a,b: zwei schematisch gezeigten Phasen des Herstellungsvorgangs der Gitterstruktur nach Fig.1 bzw. Fig. 2;
- Fig. 4: eine Ausführungsform der erfindungsgemässen Gitterstruktur perspektivisch dargestellt;
- Fig. 5 a,b: eine Seitenansicht eines jeweiligen Längs- bzw. Querdrahtes der Gitterstruktur nach Fig. 4;
- Fig. 6 a,b: ein Knotenpunkt einer Gitterstruktur nach Fig. 4, in zwei Phasen des Herstellungsprozesses dargestellt;
- Fig. 7: eine weitere Ausführungsform einer erfindungsgemässen Gitterstruktur ebenfalls perspektivisch gezeigt;
- Fig. 8: eine perspektivische Ansicht einer Variante einer erfindungsgemässen Gitterstruktur;
- Fig. 9: eine perspektivische Ansicht der Gitterstruktur nach Fig. 8 bei der Herstellung;
- Fig. 10: eine perspektivische Ansicht einer weiteren Variante einer Gitterstruktur; und
- Fig. 11: eine perspektivische Ansicht einer Variante einer erfindungsgemässen Gitterstruktur.

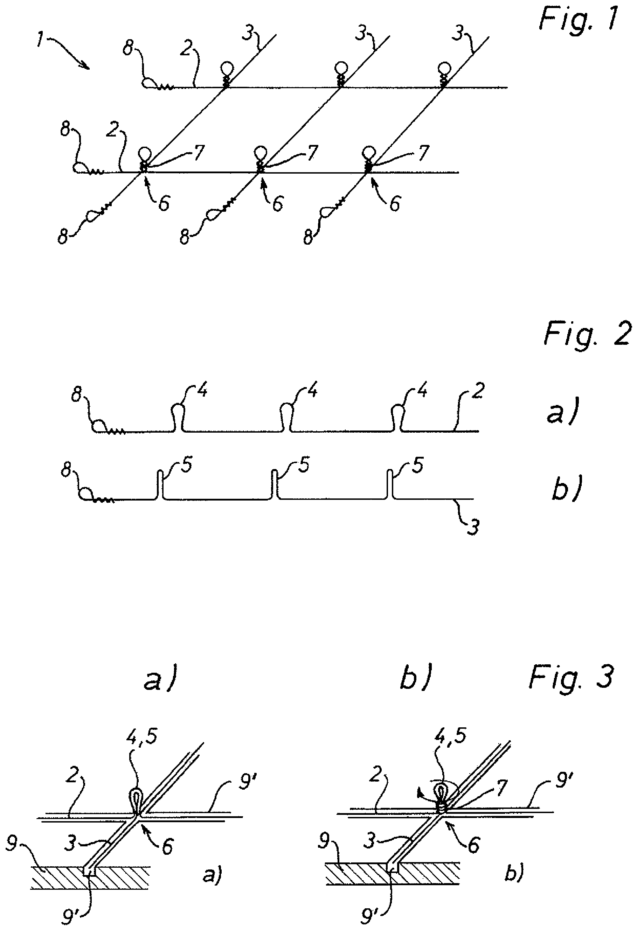

Die nicht erfindungsgemäße Gitterstruktur 1 nach Fig. 1 bis Fig. 3 besteht aus Längselementen 2 und Querelementen 3 vorzugsweise aus Stahl, die in regelmässigen Abständen mit senkrecht stehenden Schlaufen 4 bzw. 5 versehen sind. Bei diesen Längs- und Querelementen handelt es sich insbesondere um Drähte Litzen, Seile, Stäbe oder Profile. Es können aber auch Kombinationsprodukte mit Stahl und Kunststoff und/oder Kunststoffprodukte sowie Sandwichelemente davon sein.

Ferner könnten die Querelemente im Vergleich zu den Längselementen im Querschnitt unterschiedlich dimensioniert, aus unterschiedlichen Materialien undloder mit verschiedenen Eigenschaften, wie Festigkeit etc. bestehen.

Eine solche Gitterstruktur 1 eignet sich für verschiedene Anwendungen im Armierungs-, Schutz- bzw. Sicherungsbereich. So können sie beispielsweise für Armierungen in Beton, Asphalt, als Bewehrung im Bergbau oder ähnlichem eingelegt bzw. verwendbar sein.

Sie können aber auch für andere Zwecke, wie Böschungssicherungen auf Erdoberflächen jeglicher Art oder auch bei Schutzverbauungen gegen Lawinen, Steinschläge oder gegen andere Naturgefahren eingesetzt werden.

Darüberhinaus können solche Gitterstrukturen für Innen- und Aussenanwendungen bei Bauten angewendet werden, so beispielsweise als permanentes oder mobiles Schutz- oder Trennelement, welches in hochfester Ausführung ausserdem die Vandalensicherheit erhöht.

Diese Gitter sind endlos oder als Paneelen herstellbar und je nach Ausführung rollbar, was die Anwendungsmöglichkeiten erweitert und insbesondere Vereinfachungen bei Transport und Montage ermöglicht.

Die Drähte dieser Gitterstruktur 1 sind an den Kreuzungsstellen 6 durch Schlaufen 4, 5 miteinander fest verdrillt und bilden damit Knotenpunkte 7, die auch unter Belastung schubfest sind und bei Verformungen des Gitters standhalten. Damit ergibt sich eine Art Formschluss bei diesen Knotenpunkten 7:
Bei dieser Gitterstruktur 1 sind die als Drähte ausgebildeten Längs- und Querelemente 2 bzw. 3 senkrecht zueinander in einer Ebene liegend angeordnet, wobei die Knotenpunkte 7 sowohl in Längsrichtung als auch in Querrichtung mit gleichen Abständen voneinander entfernt sind.

Es ist aber auch selbstverständlich möglich, für beide Richtungen unterschiedliche Abstände vorzusehen. In beiden Fällen ist die Geometrie des Gitters beispielsweise mit der von Betonstahlmatten vergleichbar.

Als weitere Variante könnten die Knotenpunkte 7 nicht annähernd rechteckig, sondern zickzack-förmig ausgebildet sein. In der Praxis ist aber die rechteckige Anordnung sowohl herstellungstechnisch als auch im Hinblick auf ihre mechanischen Eigenschaften als vorteilhaft anzusehen. Zum Befestigen der Gitterstruktur 1 zum Beispiel an einem sie umfassenden Rahmen sind geschlossene Verankerungsschlaufen 8 an den Enden der Längs- und Querelemente 2 bzw. 3 vorgesehen, die ohne zusätzliche Mittel eine rund um das Gitter gleichmässige Befestigung ermöglichen.

Fig. 2 a) und b) zeigen einen mit Schlaufen 4 bzw. 5 vorbereiteten Längsdraht 2 bzw. Querdraht 3 und zum Zusammenbau ihrerseits einen ebenfalls zum Zusammenbau mit um 90° quergestellten Schlaufen 5 vorbereiteten Querdraht. Damit liegen die Schlaufen 4, 5 bei den Kreuzungsstellen 6 vor dem Verdrillen parallel nebeneinander, so dass das Verdrillen einfach ausgeführt werden kann.

Selbstverständlich können diese Schlaufen auch andersförmig als gezeigt vorgeformt sein. Um den jeweiligen Draht mit den quergestellten Schlaufen könnte zusätzlich mindestens ein weiterer Draht zur Bildung einer Litze gewunden sein, der ohne oder auch mit einer Schlaufe versehen sein kann.

Fig. 3 a) verdeutlicht eine zum Verdrillen der Schlaufen 4 und 5 vorbereitete Kreuzungsstelle 6, wobei die Drähte 2 und 3 in definiert beabstandeten Rillen 9' einer Montageplatte 9 oder dergleichen eingelegt sind, um ein Positionieren und Festhalten für das Verdrillen derselben zu ermöglichen. Die Rillen 9' sind dabei mit solchen Abständen zueinander in der Montageplatte 9 angeordnet, dass sie den Maschengrössen der Gitterstruktur 1 entsprechen.

Fig. 3 b) zeigt die Stelle mit miteinander verdrillten Schlaufen 4 und 5. Sie bilden an dieser Stelle einen unverschieblichen schubfesten Knotenpunkt 7.

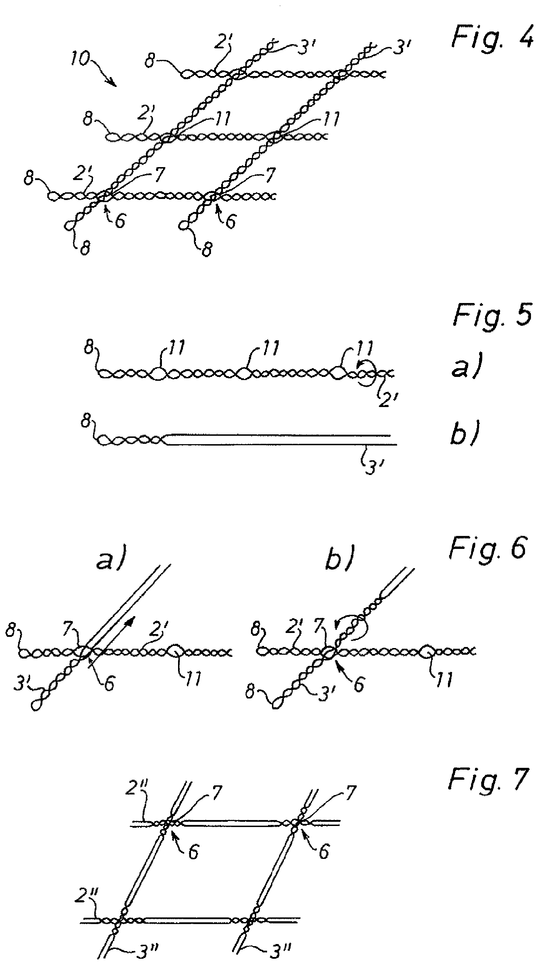

Die erfindungsgemäße Gitterstruktur 10 nach Fig. 4 und Fig. 5 a) und b) unterscheidet sich von Gitter nach Fig. 1 hauptsächlich dadurch, dass bei ihm die Längs- und Querelemente 2' bzw. 3' doppelt geführt und nicht die gebildeten Schlaufen, sondern sie jeweils mit sich selbst verdrillt sind, wobei die Längsdrähte 2' in Längsrichtung verteilt angeordnete Durchgänge 11 aufweisen, durch welche die Querelemente 3' geführt sind.

Fig. 5 a) zeigt einen zum Zusammenbau vorbereiteten Längsdraht 2 mit gleichmässig verteilten Durchgängen 11 zur Aufnahme der Querelemente.

Fig. 5 b) veranschaulicht einen ebenfalls zum Zusammenbau vorbereiteten Querdraht 3', der zunächst nur bis zur ersten Kreuzungsstelle 6 der Gitterstruktur 10 verdrillt ist.

Wie aus Fig. 6 a) und b) ersichtlich ist, wird der Querdraht 3' beim Zusammenbau der Gitterstruktur 10 durch den ersten Durchgang 11 des Längsdrahts 2' hindurchgesteckt und anschliessend bis zum nächsten Durchgang weiter verdrillt, wobei er im Bereich der Kreuzungsstelle 6 auch mit dem Längsdraht 2' fest verdrillt wird. Dieser Vorgang wird wiederholt bis der Querdraht 3' vollständig durch sämtliche Durchgänge 11 der Längsdrähte 2' geführt ist. Wenn die Durchgänge 11 entsprechend gross dimensioniert sind, ergibt sich eine in einem bestimmten Winkel verschränkbare und dadurch auch rollbare Struktur.

Die Gitterstruktur nach Fig. 7 unterscheidet sich von derjenigen nach Fig. 4 lediglich dadurch, dass die Längs- und Querelemente 2" bzw. 3" nur im Bereich der diese ineinandergeführten Kreuzungsstellen 6 verdrillt sind. Ausserhalb dieser Stellen bleiben sie unverdrillt als parallel zueinander geführte Doppel- oder Mehrfachdrähte, die an den Enden auch mit geschlossenen Verankerungsschlaufen 8 zum Befestigen des Gitters an einem ihn umfassenden Rahmen versehen sein können. Die Längs- und Querelemente könnten zwischen den Kreuzungsstellen 6 zwecks höherer Stabilität statt unverdrillt auch miteinander als Litzen mit einigen Windungen gewickelt sein.

Die Ausführungsbeispiele nach Fig. 1, Fig. 4 und Fig. 7 können selbstverständlich auch in Umkehrung der beschriebenen Anordnung ausgeführt sein. Bei der Ausführung nach Fig. 1 weisen dann die Längsdrähte 2 quer zur Längsrichtung angeordnete Schlaufen auf, währen die Querelemente 3 mit in Längsrichtung angeordneten Schlaufen versehen sind.

Bei den Ausführungsbeispielen nach Fig. 4 und Fig. 7 sind die Durchgänge 11 in den Querelementen 3' bzw. 3" angeordnet, und die Längsdrähte 2' bzw. 2" werden durch die Querelemente 3' bzw. 3" hindurchgeführt.

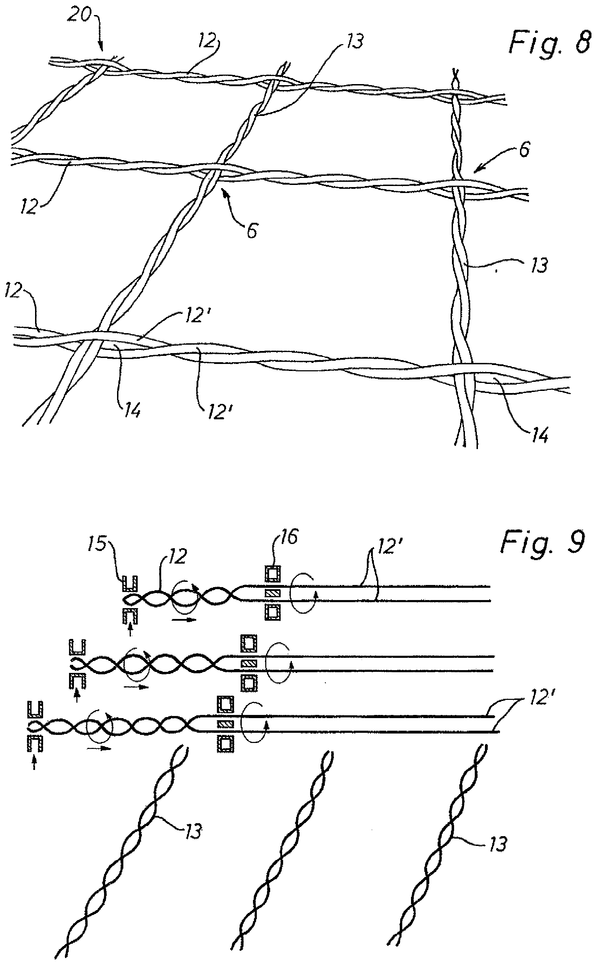

Fig. 8 zeigt ausschnittweise eine Gitterstruktur 20 mit als Litzen vorgesehenen Längs- und Querelementen 12, 13, die jeweils aus zwei gewundenen Drähten 12' gebildet sind. Es könnten aber genauso mehr als zwei Drähte vorgesehen sein.

Erfindungsgemäss sind die Querelemente 13 an den Kreuzungsstellen 6 durch Durchgänge 14 bei den Längselementen 12 hindurchgeführt und sie sind damit auf diese Weise durch Ineinanderführen miteinander verbunden. Diese Durchgänge 14 sind dabei durch Öffnungen bei den gewundenen Drähte 12' entsprechend den Maschenlängen gebildet.

Fig. 9 zeigt eine sehr vorteilhafte Herstellung der Gitterstruktur 20 nach Fig. 8, bei der eine Vielzahl von nebeneinander paarweise angeordneten Drähten 12' im Abstand der Maschenlängen von einer Vorrichtung zu Längselementen 12 gleichzeitig gewunden werden. Nach einer Anzahl erzeugter Windungen wird ein jeweiliges bereits gewundenes Querelement 13 zwischen je zwei Drähte 12' der Längselemente 12, die noch nicht gewunden sind, durchgeführt. Anschliessend wird der Windungsvorgang der Längselemente 12 fortgesetzt und dann nach einer gewissen Anzahl Windungen das nächste Querelement 13 in gleicher Weise durch die Drähte 12' geschoben. Anstelle der Längs- könnten Querelemente und umgekehrt angeordnet sein.

Erfindungsgemäß werden diese Querelemente 13 nach dem Einschieben und dem weiteren Windungsvorgang der Längselemente 12 derart mit letzteren verbunden, dass sie zwischen den Drähten 12' eingeklemmt und damit bei diesen Kreuzungsstellen 6 wie Knoten gebildet sind. Damit ergibt sich ein Kraftschluss bei diesen Kreuzungsstellen. Von dieser Vorrichtung zum Winden der Drähte 12' und dem Durchführen der Querelemente 13 sind nur gerade Halterungen 15 am Anfang der Längselemente 12 und Drehmittel 16 schematisch dargestellt. Selbstverständlich könnte diese Gitterstruktur 20 noch anders als oben erläutert hergestellt werden. Erfindungsgemäß sind die fertigen Litzen sowohl bei den Längs- als auch bei den Querelementen 12, 13 mit den entsprechenden Maschenlängen angeordnet und dabei die Längselemente durch maschinell zueinander im elastischen Bereich geöffneten Drähte der gewundenen Querelemente oder umgekehrt durchgeschoben und dann diese geöffneten Drähte wieder losgelassen werden, so dass diese ein Klemmen der durchgeführten Querelemente bewirken.

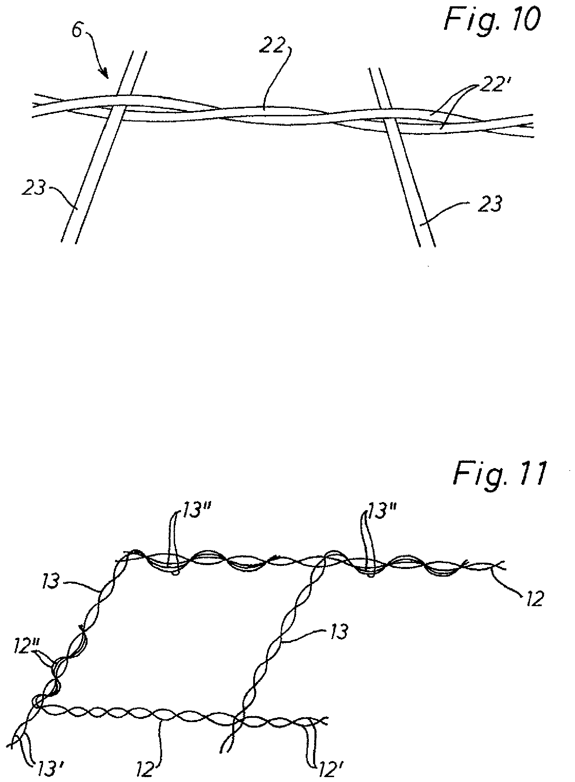

Gemäss Fig. 10 ist eine nicht erfindungsgemäße Gitterstruktur ähnlich wie diejenige nach Fig. 9 ausschnittweise veranschaulicht. Als Querelemente 23 werden anstelle von Litzen einzelne Drähte verwendet, die wiederum durch die Drähte 22' hindurchgeführt sind und so die Verbindung bei den Kreuzungsstellen 6 ebenso mit Vorteil durch ein Klemmen dieser Querelemente 23 durch die Drähte 22' erzeugt ist.

Fig. 11 zeigt schematisch eine Gitterstruktur ausschnittweise, wie beispielsweise in Fig. 4 oder Fig. 8 veranschaulicht ist, bei der die Drähte 12' der Längs- bzw. Querelemente 12, 13 verdrillt bzw. zu Litzen verseilt sind.

Diese Längs- bzw. Querelemente 12, 13 sind im Rahmen der Erfindung an den Enden mit benachbarten Quer- bzw. Längselementen 13, 12 verbunden. Im vorliegenden Ausführungsbeispiel sind die Drähte 12", 13" endseitig bei den Längs- bzw. Querelementen 12, 13 abgewinkelt und durch Um- oder Verwinden bei den äussersten rechtwinklig dazu angeordneten Quer- bzw. Längselementen 13, 12 gehalten.

Die Längs- undloder Querelemente sind aus hochfestem Stahl mit einer Festigkeit von 700 N/mm² bis 2800 N/mm² hergestellt. Damit sind diese Knotenpunkte nach dem Verdrillen noch mit einer höheren Steifigkeit zusammengehalten.

Mit dieser erfindungsgemässen Gitterstruktur lassen sich beliebige Maschenformen bzw. -grössen erzeugen. Im Prinzip könnten diese Längs- und Querelemente auch nicht wie dargestellt rechtwinklig zueinander angeordnet sein, sondern ähnlich wie beispielsweise bei Drahtgeflechten, bei denen rhomboidförmige Maschen gebildet sind.

Die Längs- undloder Querelemente könnten auch mit um annähernd 360° gebogenen Schlaufen versehen sein, durch welche die Quer- oder Längselemente mit oder ohne Verdrillung geführt sind, wie dies aus den übrigen Figuren ersichtlich ist. Die Knoten bestehen vorteilhaft aus mindestens einer Windung kreisförmiger 360° Schlaufen, die an den vorgesehenen Kreuzungsstellen vorgeformt sind und an den Querdrähten beim Zusammenbau durch Hindurchstecken, Zurückführen und erneut Hindurchstecken durch die Schlaufen der Längsdrähte gebildet werden. Dabei werden die Schlaufen so eingefädelt, dass sie bezüglich der Gitterebene spiegelbildlich zu den Schlaufen der Längsdrähte positioniert sind.

Es ist ebenfalls möglich, dass nicht sämtliche Kreuzungsstellen mit einer Verbindung, resp. Verdrillung ausgebildet sind. Es können beispielsweise auch nur jede zweite bzw. nach einer Anzahl von Elementen Kreuzungsstellen mit Verbindungen vorgesehen sein, währenddem die übrigen aneinanderliegend angeordnet sind.

## Patentansprüche

1. Gitterstruktur, welche ein flaches oder gewelltes Trag- oder Schutzgitter ausbildet, das auch bei hohen Belastungen nur geringe Verformungen erfährt, bestehend aus sich kreuzenden Längs- und Querelementen (2, 2', 2", 12, 22 bzw. 3, 3' 3", 13, 23), mit diesen zugeordneten Kreuzungsstellen (6), wobei die Längs- und Querelemente in einer Ebene liegend rechtwinklig oder mit anderen Kreuzungswinkeln zueinander ausgerichtet sind, wobei die Längselemente als Litzen ausgebildet sind und wobei die Querelemente (13) an den Kreuzungsstellen (6) durch die, Drähte der als Litzen ausgebildeten Längselemente (12) hindurchgeführt und somit durch Ineinanderführen derart miteinander verbunden sind, dass die Querelemente (13) zwischen den, die Drähten der die Litzen ausbildenden Längselemente (12) kraftschlüssig eingeklemmt sind und damit bei der Kreuzungsstellen (6) schubfeste Knotenpunkte (7) gebildet sind,
**dadurch gekennzeichnet, dass**
die Längs- und Querelementen von Litzen aus jeweils zwei oder mehr gewundenen Drähten gebildet sind,
wobei die Längs- und die Querelemente zumindest teilweise aus hochfestem Stahl mit einer Festigkeit von 700 N/mm² bis 2800 N/mm² hergestellt sind, wobei die Querelemente an den Kreuzungsstellen durch die, die gleichbleibende Schlagrichtung aufweisenden Drähte der als Litzen ausgebildeten Längselemente hindurchgeführt sind, und
wobei die Querelemente zwischen den, die Längselemente formschlüssig eingeklemmt sind.

2. Gitterstruktur nach Anspruch 1, **dadurch gekennzeichnet, dass** sich das Gitter aus zumindest doppelt geführten und mit sich selbst zumindest an den Kreuzungsstellen (6) verdrillten Längs- und Querelementen (2', 2" bzw. 3', 3") zusammensetzt.

3. Gitterstruktur nach Anspruch 2, **dadurch gekennzeichnet, dass** die Längs- und Querelemente (2" bzw. 3") nur im Bereich der ineinander geführten Kreuzungsstellen (6) verdrillt sind.

4. Gitterstruktur nach einem der vorhergehenden Ansprüche 1 bis 3, **dadurch gekennzeichnet, dass** die Abstände zwischen den Kreuzungsstellen (6) des Gitters in Längs- und Querrichtung gleichmässig oder in den Endbereichen insbesondere mit geringeren Abständen als im Mittenbereich dimensioniert sind.

5. Gitterstruktur nach einem der vorhergehenden Ansprüche 1 bis 4, **dadurch gekennzeichnet, dass** die Längs- bzw. Querelemente (2, 2', 2" bzw. 3, 3', 3") an den Enden mit geschlossenen Verankerungsschlaufen (8) versehen sind.

6. Gitterstruktur nach einem der vorhergehenden Ansprüche 1 bis 4, **dadurch gekennzeichnet, dass** die Längs- bzw. Querelemente (2, 2', 2" bzw. 3, 3', 3") an den Enden mit benachbarten Quer- bzw. Längselementen (2, 2' 2" bzw. 3, 3', 3") verbunden sind, wie durch Um-, Verwinden, Verdrillen oder ähnlichem.

7. Verfahren zum Herstellen einer Gitterstruktur nach Anspruch 1,
wobei eine Vielzahl von nebeneinander paarweise angeordneten Drähten (12') im Abstand der Maschenlängen derart zu Längselementen (12) gewunden werden, dass die Drähte (12') der Längselemente (12) zu Litzen verseilt sind, **dadurch gekennzeichnet, dass** nach einer Anzahl erzeugter regelmäßiger Windungen mindestens ein jeweiliges bereits gewundenes Querelement (13) zwischen je zwei Drähte (12') der jeweiligen Längselemente (12), die noch nicht gewunden sind, durchgeführt und anschliessend der Windungsvorgang der Längselemente (12) fortgesetzt und nach einer gewissen Anzahl regelmäßiger Windungen das nächste bereits gewundene Querelement (13) in gleicher Weise durch die Drähte (12') der jeweiligen Längselemente (12) geschoben wird, wobei die Querelemente (13) nach dem Einschieben und dem weiteren verseilenden Windungsvorgang der Längselemente (12) derart mit den Längselementen (12) verbunden sind, dass die Querelemente (13) zwischen den zu Litzen verseilten Drähten (12') der Längselemente (12) eingeklemmt und damit bei den Kreuzungsstellen (6) schubfeste Knotenpunkte (7) gebildet werden.

8. Verfahren zum Herstellen einer Gitterstruktur nach Anspruch 1,
**dadurch gekennzeichnet, dass** fertig verseilte Litzen sowohl bei den Längsals auch bei den Querelementen (12, 13) mit entsprechenden Maschenlängen angeordnet werden, dass die miteinander zu den Litzen verseilten Drähte (12') der Längselemente (12) maschinell zueinander im elastischen Bereich geöffnet werden und dass Drähte (12') der zu Litzen verseilten Querelemente (13) durch die maschinell zueinander im elastischen Bereich geöffneten Längselemente (12) durchgeschoben und dann die geöffneten Drähte (12') der Längselemente (12) wieder losgelassen werden, so dass die zu den Litzen verseilten Drähte (12') der Längselemente (12) ein kraftschlüssiges Klemmen der durchgeführten Querelemente (12, 13) bewirken und damit bei den Kreuzungsstellen (6) schubfeste Knotenpunkte (7) gebildet werden.

## Claims

1. Lattice structure forming a flat or undulate bearing grid or protective grid which is only slightly deformed even in the case of high loads,
consisting of intersecting longitudinal and transversal elements (2, 2', 2", 12, 22 respectively 3, 3', 3", 13, 23),
with intersection points (6) allocated to said longitudinal and transversal elements (2, 2', 2", 12, 22 respectively 3, 3', 3", 13, 23),
the longitudinal and transversal elements being situated in a plane and oriented at right angles or with other intersection angles with respect to one another, wherein the longitudinal elements are embodied as strands and
wherein the transversal elements (13) are in the intersection points (6) passed through the wires of the longitudinal elements (12) realized as strands, and are thus connected to one another, being passed into one another, in such a way that the transversal elements (13) are clamped between the wires of the longitudinal elements (12) which form the strands; and
in this way non-displaceable nodes (7) are formed in the intersection points (6), **characterised in that** the longitudinal and transversal elements are formed by strands of respectively two or more than two twisted wires,
the longitudinal and transversal elements being made at least partially of high-tensile steel having a strength of 700 N/mm² to 2,800 N/mm²,
the transversal elements being in the intersection points passed through the wires of the longitudinal elements formed as strands, which have a constant direction of lay, and
the transversal elements being clamped between the longitudinal elements in a form-fit manner.

2. Lattice structure according to claim 1,
**characterised in that** the lattice is composed of longitudinal and transversal elements (2, 2" respectively 3', 3") which are at least double-guided and which are twisted with themselves at least in the intersection points (6).

3. Lattice structure according to claim 2,
**characterised in that** the longitudinal and transversal elements (2" respectively 3") are twisted only in the region of the intersection points (6) which have been passed into one another.

4. Lattice structure according to one of the preceding claims 1 to 3,
**characterised in that** the distances between the intersection points (6) of the lattice in the longitudinal and transversal directions are dimensioned regularly or are dimensioned in the end regions in particular with smaller distances than in a middle region.

5. Lattice structure according to one of the preceding claims 1 to 4,
**characterised in that** the longitudinal, respectively transversal elements (2, 2', 2" respectively 3, 3', 3") are at their ends provided with closed anchoring loops (8).

6. Lattice structure according to one of the preceding claims 1 to 4,
**characterised in that** in the longitudinal, respectively transversal elements (2, 2', 2" respectively 3, 3', 3") are at their ends connected to neighbouring transversal, respectively longitudinal elements (2, 2', 2" respectively 3, 3', 3"), for example by wrapping-around, winding, twisting or the like.

7. Method for producing a lattice structure according to claim 1,
wherein a plurality of wires (12'), which are arranged side by side in pairs, are wound to form longitudinal elements (12) at a distance of the mesh lengths in such a way that the wires (12' of the longitudinal elements (12) are stranded to form strands,
**characterised in that** after a number of regular windings have been generated, at least one respective already-wound transversal element (13) is passed between respectively two wires (12') of the respective longitudinal elements (12) which are not yet wound, and then the winding process of the longitudinal elements (12) is continued,
and after a certain number of regular windings the next already-wound transversal element (13) is inserted in the same manner through the wires (12') of the respective longitudinal elements (12),
wherein after the insertion and the further stranding and winding process of the longitudinal elements (12), the transversal elements (13) are connected to the longitudinal elements (12) in such a way that the transversal elements (13) are clamped between the wires (12') of the longitudinal elements (12) which have been stranded to form strands,
and thus non-displaceable nodes (7) are formed at the intersection points (6).

8. Method for producing a lattice structure according to claim 1,
**characterised in that** completely stranded strands are arranged at the longitudinal elements (12) and at the transversal elements (13) with suitable mesh lengths such that the wires (12') of the longitudinal elements (12), which are stranded with one another to form strands, are opened machine-wise with respect to each other in the elastic region,
and that wires (12') of the transversal elements (13) which have been stranded to form strands are inserted through the longitudinal elements (12) which were opened machine-wise with respect to each other in the elastic region, and then the opened wires (12') of the longitudinal elements (12) are released once more, such that the wires (12') of the longitudinal elements (12), which have been stranded to form strands, bring about a force-fit clamping of the passed-through transversal elements (12, 13),
and thus non-displaceable nodes (7) are formed in the intersection points (6).

## Revendications

1. Structure en treillis formant un treillis porteur ou treillis protecteur, planaire ou ondulé,
qui est peu déformable même sous grandes charges et
qui est réalisé des éléments longitudinaux et transversaux intersectionnants (2, 2', 2", 12, 22, respectivement 3, 3', 3", 13, 23),
avec des points d'intersection (6) alloués auxdits éléments longitudinaux et transversaux intersectionnants (2, 2', 2", 12, 22, respectivement 3, 3', 3", 13, 23),
les éléments longitudinaux et transversaux étant situés dans un plan et orientés à angle droit ou avec des autres angles d'intersection les uns par rapport aux autres, où les éléments longitudinaux sont réalisés comme cordons et
où les éléments transversaux (13) sont passés à travers les fils métalliques des éléments longitudinaux (12) réalisés comme cordons et ainsi, en étant passés l'un dans l'autre, ils sont liés les uns avec les autres
tellement que les éléments transversaux (13) sont enserrés solidairement entre les fils métalliques des éléments longitudinaux (12) qui forment les cordons,
et donc des noeuds (7) non-déplaçables sont formés dans les points d'intersection (6),
**caractérisée en ce que**
les éléments longitudinaux et transversaux sont réalisés par cordons formés de respectivement deux ou plus de deux fils métalliques tordus,
les éléments longitudinaux et les éléments transversaux étant produits au moins partiellement d'acier à haute résistance ayant une résistance de 700 N/mm² à 2800 N/mm²,
où dans les points d'intersection les éléments transversaux sont passés à travers les fils métalliques des éléments longitudinaux réalisés comme cordons, qui ont un sens de câblage constant, et
où les éléments transversaux sont enserrés entre les éléments longitudinaux en liaison de forme.

2. Structure en treillis selon la revendication 1,
**caractérisée en ce que** le treillis est composé des éléments longitudinaux et transversaux (2', 2" respectivement 3', 3") guidés au moins en double et torsadés en eux-mêmes au moins dans les points d'intersection (6).

3. Structure en treillis selon la revendication 2,
**caractérisée en ce que** les éléments longitudinaux et transversaux (2" respectivement 3") sont torsadés seulement dans la zone des points d'intersection (6) qui sont guidés l'un dans l'autre.

4. Structure en treillis selon l'une des revendications 1 à 3 précédentes,
**caractérisée en ce que** les distances entre les points d'intersection (6) du treillis sont dimensionnées régulièrement en direction longitudinale et en direction transversale ou sont dimensionnées dans les zones d'extrémité en particulier avec des distances inférieures aux distances dans la zone centrale.

5. Structure en treillis selon l'une des revendications 1 à 4 précédentes,
**caractérisée en ce que** les éléments longitudinaux respectivement transversaux (2, 2', 2" respectivement 3, 3', 3") sont pourvus aux extrémités de dragonnes d'ancrage (8) fermées (8).

6. Structure en treillis selon l'une quelconque des revendications 1 à 4 précédentes,
**caractérisée en ce que** les éléments longitudinaux respectivement transversaux (2, 2', 2" respectivement 3, 3', 3") sont liés aux extrémités avec des éléments transversaux respectivement longitudinaux (2, 2', 2" respectivement 3, 3', 3"), par exemple par torsade, torsion, rotation ou similaire.

7. Procédé de fabrication d'une structure en treillis selon la revendication 1, où une pluralité de fils métalliques (12') agencés côte à côte en paires sont tordus pour former des éléments longitudinaux (12) dans la distance des longueurs-maille en sorte que les fils métalliques (12') des éléments longitudinaux (12) sont câblés pour former des cordons,
**caractérisé en ce que** après un nombre de torsions régulières générées, au moins un élément transversal respectif (13) déjà tordu est passé entre respectivement deux fils métalliques (12') des éléments longitudinaux respectifs (12) pas encore tordus et ensuite le procès de torsion des éléments longitudinaux (12) est continu et
après un certain nombre de torsions régulières le prochain élément transversal (13) déjà tordu est inséré de même façon à travers les fils métalliques (12') des éléments longitudinaux respectifs (12),
où après l'insertion et le procès suivant de câblage et de torsion des éléments longitudinaux (12), les éléments transversaux (13) sont liés aux éléments longitudinaux (12) de telle manière que les éléments transversaux (13) sont enserrés entre les fils métalliques (12') des éléments longitudinaux (12) qui sont câblés pour former des cordons, et ainsi des noeuds (7) non-déplaçables sont formés aux points d'intersection (6).

8. Procédé de fabrication d'une structure en treillis selon la revendication 1, **caractérisé en ce que** des cordons complètement câblés sont agencés avec les éléments longitudinaux et transversaux (12, 13) ayant des longueurs-maille appropriées de sorte que
les fils métalliques (12') des éléments longitudinaux (12), qui sont câbles l'un avec l'autre pour former des cordons, sont ouverts machinalement l'un par rapport à l'autre dans une zone élastique et que des fils métalliques (12') des éléments transversaux (13) câblés pour former des cordons sont insérés à travers les éléments longitudinaux (12) qui sont ouverts machinalement l'un par rapport à l'autre dans la zone élastique, et puis les fils métalliques ouverts (12') des éléments longitudinaux (12) sont relâchés de sorte que
les fils métalliques (12') des éléments longitudinaux (12), qui sont câblés pour former des cordons, induisent l'enserrement de manière solidaire des éléments transversaux (12, 13) passés à travers
et ainsi des noeuds (7) non-déplaçables sont formés aux points d'intersection (6).
